(19) Europäisches Patentamt
European Patent Office
Office européen des brevets

(11) **EP 1 841 040 A2**

(12) # EUROPEAN PATENT APPLICATION

(43) Date of publication:
**03.10.2007 Bulletin 2007/40**

(51) Int Cl.:
***H02K 1/14*** *(2006.01)* ***H02K 41/02*** *(2006.01)*

(21) Application number: **07005888.8**

(22) Date of filing: **22.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 GB 0606483**

(71) Applicant: **Converteam Ltd**
**Rugby**
**Warwickshire CV21 1BU (GB)**

(72) Inventor: **Le Flem, Graham Derek**
**Rugby**
**Warwickshire CV23 0SU (GB)**

(74) Representative: **Serjeants**
**25 The Crescent**
**King Street**
**Leicester, LE1 6RX (GB)**

(54) **Tubular electrical machines**

(57) The present invention provides a stator for a tubular electrical machine having a substantially cylindrical inner surface containing a series of axially-spaced slots for receiving the coils (C) of a stator winding. The stator comprises axially successive layers of laminations (2), each layer being formed from a number of curved laminations stacked together in the circumferential direction.

Figure 7

## Description

<u>Technical Field</u>

The present invention relates to tubular electrical machines, and in particular to physically large tubular electrical motors and generators that are suitable for use as direct drive generators for converting wave energy into electrical power.

<u>Background Art</u>

It is known to use linear electrical machines as generators to convert the reciprocating movement captured by a wave energy machine into electrical power.

Tubular electrical machines are similar to linear electrical machines but instead of having a flat stator they have a tubular stator where the slots for receiving the coils of the stator winding are formed in the cylindrical inner surface. The flat translator is replaced with a hollow or solid tubular translator, which in one embodiment has rows of permanent magnets mounted around its cylindrical outer surface. In another embodiment, the translator has solid coils mounted in slots in a similar manner to the stator so that the machine can act as an induction machine.

Tubular electrical machines offer considerable benefits over linear electrical machines because the tubular structure of the stator is inherently strong. However, a main drawback and limitation of their use in large physical sizes is the need to control eddy currents in the core of the stator. If the flux is considered to flow through the stator of a linear electrical machine in a longitudinal direction then for ease of manufacture the stator is ideally formed from a series of laminations stacked against each other in the transverse direction that is parallel to the slots for the coils of the stator winding. However, normal laminations stacked in this manner would allow eddy currents to flow and prevent the tubular electrical machine from operating. The inability to control eddy currents has so far prevented the development of tubular electrical machines having the physical size and rating that would enable them to be used as a direct drive generator for large-scale wave energy machines.

On small tubular electrical machines with intermittent operation, such as those used for opening sliding doors, for example, the problem of eddy currents can be overcome by using amorphous stator cores. The magnetic permeability and thermal conductivity of such amorphous stator cores are poor compared to the conventional laminations used in the flat stators of linear electrical machines and they can only be produced in small physical sizes.

United States Patent 5382860 proposes a solution to the problem of eddy currents in tubular electrical machines by forming the stator core from groups of circumferentially abutting laminations which collectively define a bore of the stator core and a perimeter. Wedges are positioned between adjacent pairs of the lamination groups to provide a continuous path around the perimeter. Although the laminations are mounted in the correct plane to reduce eddy currents, the proposed solution makes construction of the stator very difficult because of the need for the lamination groups and the wedges to be mechanically connected together.

A further solution is to eliminate the stator core completely and use an air-cored stator. However, this leads to very high magnetising requirements and is simply not economical for most practical purposes.

<u>Summary of the Invention</u>

The present invention seeks to overcome the problem of eddy currents by providing a stator for a tubular electrical machine having a substantially cylindrical inner surface containing a series of axially-spaced slots for receiving the coils of a stator winding, wherein the stator comprises axially successive layers of laminations, each layer being formed from a number of curved laminations stacked together in the circumferential direction.

The tubular construction of the stator offers several advantages over a linear construction. First of all, the resulting stator has inherent mechanical strength and rigidity arising from its tubular shape so that it can better withstand the forces that act on it when the tubular electrical machine is operating. The length of the stator for a tubular electrical machine can also be much less than the flat stator for a linear electrical machine of equivalent rating. This is because the coils of the stator winding of a tubular electrical machine are annular and there are no endwindings. More particularly, the tubular construction means that the effective length of the stator winding is longer (being approximately the inner diameter of the stator core multiplied by $\pi$) so the axial length of the stator can be substantially reduced while still providing the same air gap area as the linear electrical machine.

The eddy currents are kept within normal limits because the stator is laminated in the circumferential direction with the laminations being stacked together in a side-by-side relationship with their curved faces in contact with other. A part of each lamination adjacent the inner surface of the stator is preferably aligned with a radius of the stator. In other words, the laminations are preferably stacked such that they are radial at the inner surface of the stator and then gradually curve away from the radius of the stator as the stator core increases in diameter.

The laminations may have different radial lengths so that the series of annular slots can be formed at axial intervals along the substantially cylindrical inner surface of the stator. In other words, the stator can be formed from one or more layers of stacked laminations having a first radial length such that their radially inner edges together define the substantially cylindrical inner surface of the stator and one or more layers of stacked laminations having a second radial length that is less than the first radial length such that their radially inner edges define radially inner surfaces of the axially-spaced slots for receiving the coils of the stator winding.

However, it is generally preferred that the laminations have an L-shaped or stepped configuration (when viewed in the circumferential direction) such that a first radially inner edge of each lamination defines the substantially cylindrical inner surface of the stator and a second radially inner edge of each lamination defines an end surface of a slot. A single layer of stacked laminations will therefore define a part of the inner surface of the stator and a slot for receiving a coil of the stator winding.

The outer surface of the stator is preferably also substantially cylindrical. However, both of the inner and outer surfaces of the stator, and the end surface of the axially-spaced slots, can be a reasonably close polygonal-approximation to cylindrical and the claims should be interpreted accordingly. The outer surface of the stator is preferably defined by a radially outer edge of each lamination.

Selected laminations may have a reduced axial dimension to define radially-extending passages that enable allow the coil connections of the stator winding to pass through to the outside of the stator where they can be run to a terminal unit or a power converter, for example. Radially-extending passages may also be provided between adjacent laminations in a particular layer or between axially-adjacent layers.

Selected laminations can have a reduced radial dimension to define at least one axially-extending channel in an outer surface of the stator for receiving the coil connections. An axially-extending channel can also be formed between adjacent laminations of each axially-successive layer. The number of axially-extending channels can depend on the number of phases of the tubular electrical machine. For example, if the tubular electrical machine is designed for three-phase operation then the outer surface of the stator may include three separate axially-extending channels for receiving the coil connections associated with each of the phases. Alternatively, all of the coil connections can be received in a single channel. In practice, the stator may be surrounded by a protective casing or outer housing and the channels are therefore provided between the outer surface of the stator and the inner surface of this casing. The axially-extending channels can also be omitted completely with the coil connections being housed in a terminal box fabricated in a stator casing or frame surrounding the stator core.

The casing may have a good thermal conductivity so that the stator can be cooled by conduction of heat out through the casing. In one practical embodiment where the present invention is used as a direct drive generator for a wave energy machine, the casing can be surrounded by sea water so that the heat generated in the stator core and windings can be conducted directly out through the casing to the sea water, which acts as an infinite heat sink.

Each of the individual laminations is formed from a suitable type of lamination steel as known in conventional rotating electrical machines and coated with a suitable insulating coating or film. The laminations can be stamped out from planar lamination steel using conventional manufacturing techniques. The laminations are typically between about 0.5 mm and about 4 mm thick but in practice this will depend on the dimensions and operating parameters of the tubular electrical machine and the choice of the manufacturing method. The planar blanks are then pressed to provide a predetermined amount of curvature. Other manufacturing methods such as machining can also be used.

The laminations are preferably given a certain degree of curvature such that their side surfaces are in contact with adjacent laminations when they are stacked together in the circumferential direction. The laminations may extend along the arc of a circle having a predetermined diameter. In this case, radially inner and outer regions of the side surfaces of adjacent stacked laminations will be in contact with each other but in practice there may be a slight gap (typically in the order of 0.1 to 0.01 mm) between radially intermediate regions of the side surfaces of adjacent stacked laminations. This gap does not affect the performance of the laminations or the stator.

If the laminations extend along the arc of a circle then a radially inner edge of each lamination is preferably aligned with a radius of the circle. A radially outer edge of each lamination can be aligned with a radius of the circle or angled with respect to the radius of the circle depending on the desired construction of the outer surface of the stator. In the case where the laminations have an L-shaped or stepped configuration, a first radially inner edge of each lamination is preferably aligned with a radius of the circle to define the substantially cylindrical inner surface of the stator and a second radially inner edge of each lamination is preferably angled with respect to the radius of the circle to define a substantially cylindrical end surface of a slot.

The present invention further provides a tubular electrical machine including a stator as described above, a stator winding having a series of coils received in the series of axially-spaced slots contained in the substantially cylindrical inner surface of the stator, and a translator located inside the stator and spaced apart from the substantially cylindrical inner surface of the stator by an air gap.

The present invention further provides a method of manufacturing a stator for a tubular electrical machine comprising the steps of producing curved laminations, and forming axially successive layers of laminations, each layer being formed by stacking a plurality of the curved laminations together in the circumferential direction around a central mandrel to form a stator core having a substantially cylindrical inner surface containing a series of axially-spaced slots for receiving the coils of a stator winding, whereby radially inner edges of the curved laminations define the slots and the inner surface of the stator.

Each coil of the stator winding is preferably inserted into an associated one of the axially-spaced slots as the axially successive layers of laminations are formed. The coils are preferably of a simple circular section with two spiral wound tiers mounted side by side in the annular slots. One tier is wound in one rotation and the other tier is wound with the opposite rotation, so that when they are placed side by side and connected together they will both carry current in the same direction. The coils are therefore simple to make and assemble. The number of axially-spaced slots in the substantially cylindrical surface of the stator will depend on the pole number of the tubular electrical machine and the number of coils per pole.

The radially inner edges of the laminations that overhang the slots can be supported by an annular ring of non-magnetic insulating material provided in each slot next to the associated coil. The insulating material is preferably located on the radially inner side of the associated coil. An annular ring of insulating can also be placed in each slot on the radially outer side of the associated coil between the coil and the stacked laminations.

Clamp plates can be placed at both ends of the assembled stator to compress the successive layers of stacked laminations between the clamp plates and provide a rigid support for the mechanical loads. The clamped stator is then preferably placed in a sealed tank where it undergoes a Vacuum Pressure Impregnation (VPI) process. More particularly, the stator is subjected to a vacuum before resin is pumped into the assembly. The stator is then cured at an elevated temperature (typically about 180° C) for a period of time to set the resin. After the VPI process has been carried out, the stator is essentially an integral structure with the successive layers of circumferentially-stacked laminations bonded together and insulated by the cured resin. The stator therefore has a high degree of structural rigidity and is able to withstand the mechanical forces that it experiences during the normal operation of the tubular electrical machine.

Each layer can include at least one segment that is non-laminated. The segment or segments in each layer are preferably aligned with each other to form one or more solid regions extending along the axial length of the stator. These non-laminated segments can be used to provide passages for the coil connections.

The flux in the stator of a tubular electrical machine flows axially through the successive layers of stacked laminations. However, because the laminations are stacked together in side-by-side in the circumferential direction, eddy currents cannot circulate freely and losses are minimised. Eddy current losses are proportional to the frequency squared. This means that eddy current losses can also be reduced by lowering the operating frequency of the tubular electrical machine, by using a low pole number, for example.

The thickness of the laminations in the circumferential direction should be chosen such that any heat generated in the radially inner regions of the stator core can be easily conducted straight out to the protective casing or outer housing mentioned above.

The present invention further provides a curved lamination for forming a stator of a tubular electrical machine and having a stepped configuration such that a first radially inner edge of the lamination defines a part of an inner surface of the stator and a second radially inner edge of the lamination defines a part of an end surface of a slot when a number of laminations are stacked together in the circumferential direction.

Drawings

Figure 1 is a perspective view of a curved lamination used to form a stator according to the present invention;
Figure 2 is a plan view of the curved lamination of Figure 1;
Figure 3 is a plan view of a number of curved laminations of Figure 1 stacked together in the circumferential direction to form part of a stator;
Figures 4A, 4B and 4C are detail views of the plan view of Figure 3;
Figure 5 is a perspective view of part of a stator;
Figure 6 is a perspective view of three axial layers of a stator including a clamp plate;
Figure 7 is a detail perspective view of part of the stator of Figure 6; and
Figure 8 is a detail perspective view of part of a stator showing how the coil connections can exit the stator through axially- and radially-extending passages.

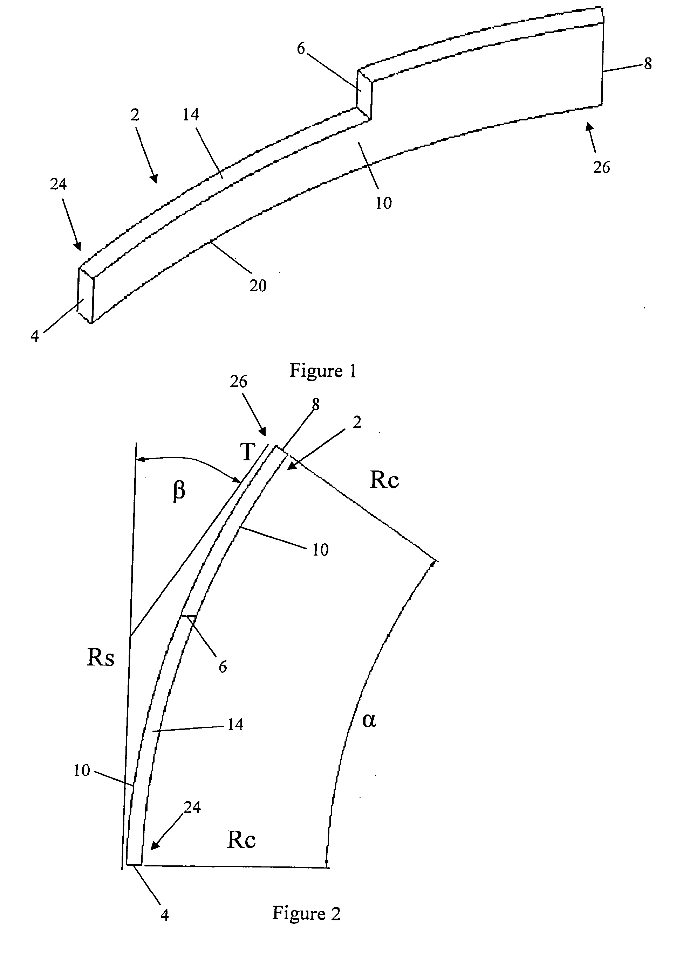

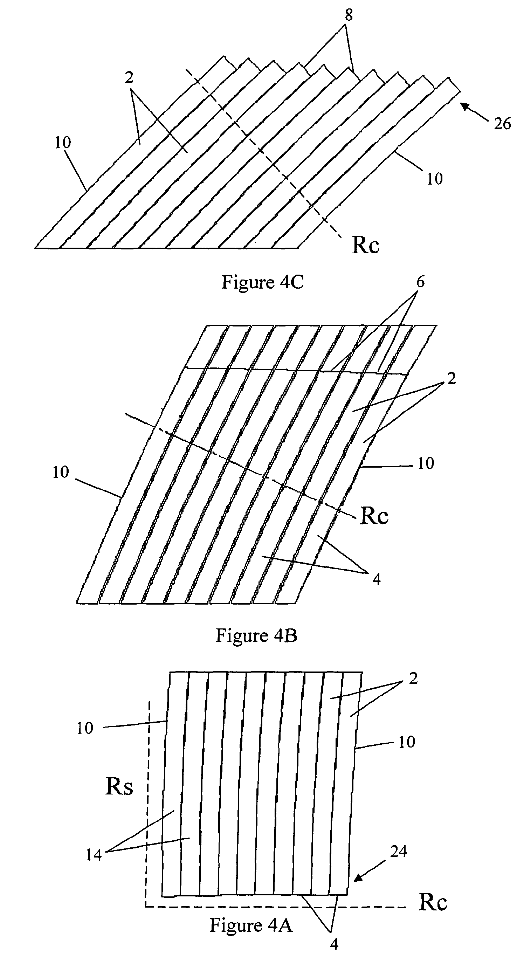

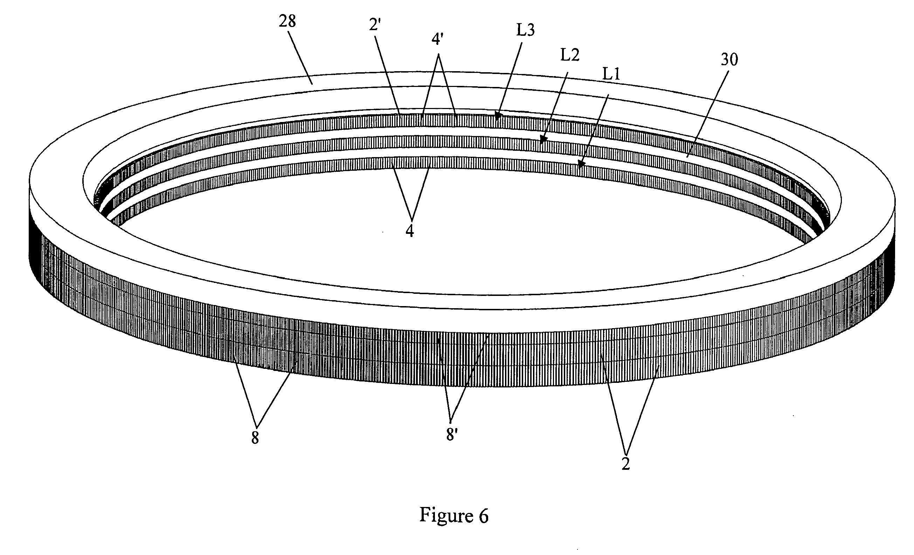

With reference to Figures 1 and 2 a lamination 2 for forming a stator of a tubular electrical machine is punched out of a blank of electrical steel and then mechanically pressed to adopt a curved shape. The thickness of the electrical steel can be the maximum available in conventional electrical steels (currently about 1 mm) but thinner or thicker steels can be used. The laminations can be pre-insulated or coated with a thin film of insulating material after forming. The lamination 2 has an L-shaped or stepped configuration and includes a first radially inner edge 4 that forms part of the cylindrical inner surface of the stator, a second radially inner edge 6 that forms part of a cylindrical end surface of a slot for receiving a coil C of a stator winding (Figure 6 to 8) and a radially outer edge 8 that forms part of the outer surface of the stator. The lamination 2 is curved to extend along an arc of a circle of predetermined diameter. The degree of arc $\alpha$ along which the lamination 2 extends is a function of the ratio between the diameter of the inner and outer surfaces of the stator. The first radially inner edge 4 and the radially outer edge 8 of the lamination 2 are aligned with a radius Rc of the circle. However, the second radially inner edge 6 is angled with respect to the radius Rc of the circle. The reasons for this will be explained in more detail below with reference to Figures 4A, 4B and 4C.

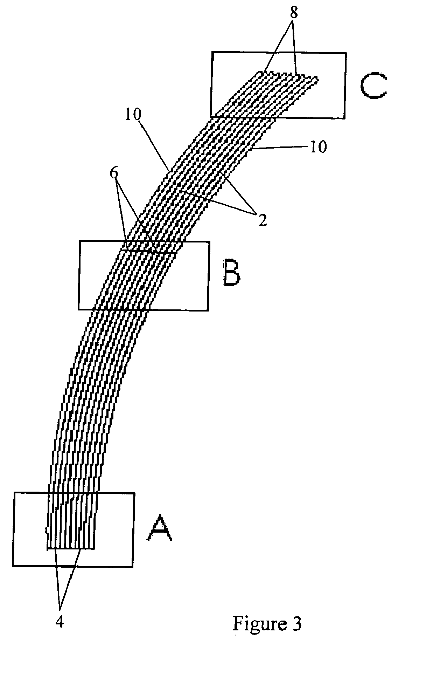

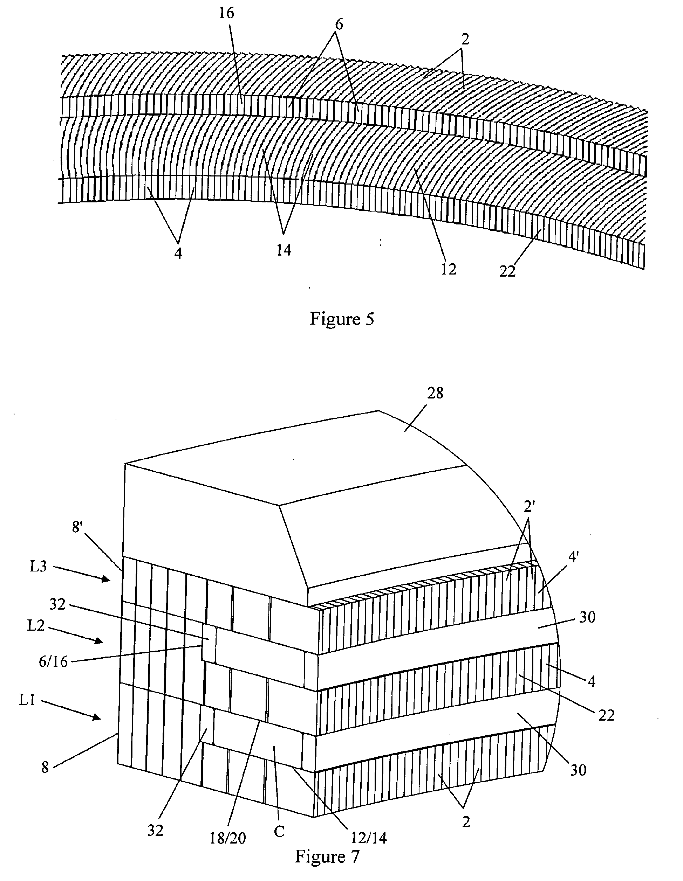

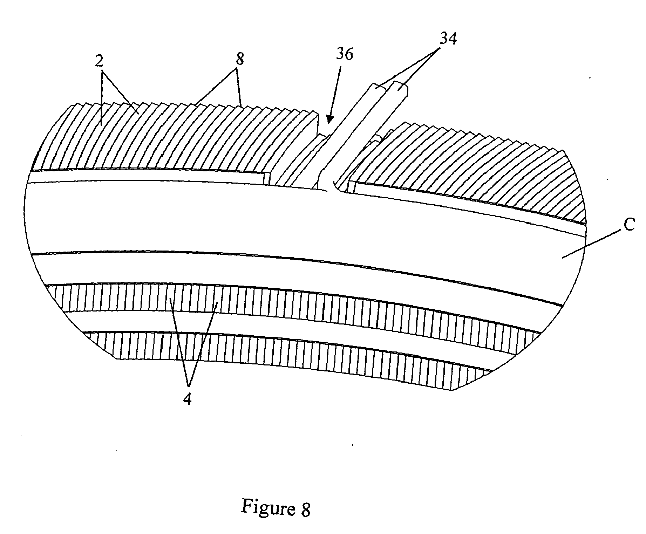

The stator is formed from axially successive layers of laminations. Part of a layer is shown in Figure 3 and includes a number of identical laminations 2 stacked together side-by-side in the circumferential direction. It is generally preferred that the laminations 2 have a certain degree of curvature such that the side surfaces 10 of adjacent stacked laminations are in contact with each other along their full extent. However, in the illustrated case, where the laminations 2 extend along an arc of a circle, the side surfaces 10 of adjacent stacked laminations will be spaced apart by a very small gap, typically in the region of 0.1 to 0.01 mm, at a central region. Because each of the laminations 2 has an L-shaped or stepped configuration, only a single layer is needed per slot. More particularly, the lower annular surface 12 (Figures 5 and 7) of the slot is made up of the surfaces 14 of the laminations 2 and the cylindrical end surface 16 of the slot is made up of the radially inner surfaces 6 of the laminations. The upper annular surface 18 (Figure 7) of the slot is then made up of the overhanging radially inner part of the surfaces 20 of the laminations 2 of an axially adjacent layer. The cylindrical inner surface 22 of the stator is made up of the first radially inner edges 4 of the laminations 2. The number N of laminations per layer can be determined with reference to the following equation:

$$N = \frac{2\pi R}{(L + I)}$$

where $R$ is the radius of the inner cylindrical surface of the stator, $L$ is the thickness of each lamination, and $I$ is the thickness of any insulation associated with each lamination.

The laminations 2 are arranged such that a radially inner part 24 of each lamination is aligned with a radius Rs of the stator and a tangent T to a radially outer part 26 of each lamination is displaced from the radius of the stator by a predetermined angle $\beta$. The arrangement of adjacent laminations 2 is more clearly shown in Figures 4A, 4B and 4C, which are detail views of the regions within the boxes A, B and C of Figure 3, and in Figure 5. Figure 4A shows how the radially inner parts 24 of the laminations 2 are aligned with the radius Rs of the stator and the first radially inner edges 4 are aligned with a radius Rc of the circle along which each lamination extends. Figure 4B shows how the second radially inner edges 6 of the laminations 2 are angled with respect to a radius Rc of the circle along which each lamination extends such that they define the cylindrical end surface 16 of a slot. In other words, the second radially inner edge 6 of each lamination 2 is aligned with a tangent of a circle having a radius that is equal to the radius of the cylindrical end surface 16.

Figure 4C shows how the radially outer edges 8 of the laminations 2 are all aligned with a radius Rc of the circle along which each lamination extends. This results in a "staggered" outer surface that approximates to a substantially cylindrical surface. Such a "staggered" outer surface can lead to problems with heat transfer along the laminations to a protective casing (not shown) surrounding and containing the stator. It is therefore possible for the radially outer edge 8 of each lamination 2 to be angled with respect to the radius of the circle such that the outer surface of the stator is substantially "smooth". In other words, the radially outer edge 8 of each lamination 2 can be aligned with a tangent of a circle having a radius that is equal to the radius of the desired outer surface of the stator.

By way of example, for a stator having an inner diameter of about 600 mm and an outer diameter of about 800 mm, the axial height of the first radially inner edge 4 of the lamination 2 may be about 13 mm and the axial height of the radially outer edge 8 may be about 28 mm. The lamination 2 may extend along about a 35 degree arc of a circle having a diameter of about 280 mm and the tangent of the radially outer part 24 may be displaced from the radius of the stator by about 40 degrees. In other words, the predetermined angles $\alpha$ and $\beta$ shown in Figure 2 may be about 35 and about 40 degrees, respectively.

With reference to Figures 6 to 8, to assemble the stator a first stainless steel clamp plate (not shown but similar to the second clamp plate 28) is positioned to form one end of the stator core. Layers are then formed by stacking a number of laminations 2 together in the circumferential direction around a central mandrel (not shown). A coil C of the stator winding is positioned in each slot as the axially successive layers of laminations are stacked together around the central mandrel. An annular ring 30 of non-magnetic insulating material is used to seal the opening of each slot and provide mechanical support for the coil C. A second annular ring 32 of non-magnetic material is positioned between the coil C and the cylindrical end surface 16 of each slot.

Electrical connections 34 (Figure 8) associated with the coil C are run out through a gap or passage 36 provided between individual laminations in the same layer. A passage may also be provided between laminations in axially adjacent layers. The passage 36 is aligned with selected laminations of reduced radial dimension (i.e. laminations whose radially outer surface is stepped back from the outer surface of the stator) and allows the coil connections for each of the three-phases to be connected together in a known manner.

Once all of the layers of laminations 2 have been stacked around the central mandrel to define a stator having a series of axially-spaced slots, each slot containing a coil C of the stator winding, a second stainless steel clamp plate 28 is placed on top of the stator to complete the wound corepack. The clamp plates are then clamped together to mechanically press the layers together. The assembled stator is placed inside a sealed tank (not shown) where it undergoes a Vacuum Pressure Impregnation (VPI) process in which a vacuum is created inside the tank and resin is pumped into the gaps between the individual laminations. The stator is then cured at 180° C for a period of time to set the resin and bond the laminations together.

The assembled stator is placed inside a protective casing (not shown) having good thermal conductivity properties.

Figures 6 and 7 show three separate layers of laminations. The bottom two layers (labelled L1 and L2) are made up of L-shaped or stepped laminations having a first radially inner edge 4 that forms part of the cylindrical inner surface 22 of the stator, a second radially inner edge 6 that forms part of a cylindrical end surface 16 of a slot for receiving a coil C of a stator winding and a radially outer edge 8 that forms part of the outer surface of the stator. It will be readily appreciated that in Figure 7 the stator has been cut away along a radius of the stator rather than along the arc of the circle followed by the stacked laminations 2. The vertical lines extending along the cut away face of the stator therefore represent the eight adjacent curved laminations 2 as they curve across the radius of the stator. The third layer (labelled L3) adjacent the clamp plate 28 is made up of simple rectangular curved laminations 2' having a radially inner edge 4' that forms part of the cylindrical inner surface 22 of the stator and a radially outer edge 8' that forms part of the outer surface of the stator.

The tubular electrical machine can be used as a direct drive generator for a wave energy machine. In this case, a translator (not shown) mounted for translation within the stator and separated from the inner surface by an air gap can be connected to a part of the wave energy machine that undergoes reciprocal movement and the stator can be connected to a stationary part so that relative movement between the two parts of the wave energy machine will induce an electrical current in the stator winding. The casing of the tubular electrical machine can be surrounded with sea water and the part of the casing surrounding the stator has good thermal conductivity so any heat generated in the curved laminations can be conducted straight out through the casing to the sea water. This removes the need for any other cooling source within the stator itself because the sea water essentially acts as an infinite heat sink.

Eddy currents cannot circulate in the circumferential direction because the stator is laminated. Although a large number of laminations will be needed for a complete stator on a physically large tubular electrical machine, they are cheap to produce with conventional punching tools and can be assembled in an automated manner because they are identical. The laminations provide excellent thermal conduction for cooling and good mechanical stiffness once they have been clamped and bonded together.

On physically small tubular electrical machines the ratio of the diameter of the inner and outer surfaces of the stator will be relatively high and a greater amount of curvature is needed to stack the laminations together in a suitably tight manner. However, on physically large tubular electrical machines the ratio of the diameter of the inner and outer surfaces of the stator will be relatively small and a lesser amount of curvature is needed. This means that thicker laminations can be used, leading directly to an increase in the ease of construction and assembly for physically large tubular electrical machines.

## Claims

1. A stator for a tubular electrical machine having a substantially cylindrical inner surface containing a series of axially-spaced slots for receiving the coils (C) of a stator winding, wherein the stator comprises axially successive layers of laminations, each layer being formed from a number of curved laminations (2) stacked together in the circumferential direction.

2. A stator according to claim 1, wherein radially inner edges (4,6) of the laminations (2) define the slots and the inner surface (22) of the stator.

3. A stator according to claim 1 or claim 2, wherein the laminations (2) have a stepped configuration such that a first radially inner edge (4) of each lamination defines the inner surface (22) of the stator and a second radially inner edge (6) of each lamination defines the end surface (16) of a slot.

4. A stator according to any preceding claim, wherein the stator includes an outer surface that is substantially cylindrical.

5. A stator according to claim 4, wherein the outer surface of the stator is defined by a radially outer edge (8) of each lamination (2).

6. A stator according to any preceding claim, wherein selected laminations have a reduced axial dimension to define radially-extending passages (36) for connections to the stator winding.

7. A stator according to any preceding claim, wherein selected laminations have a reduced radial dimension to define at least one axially-extending channel in an outer surface of the stator.

8. A stator according to any preceding claim, wherein a part of each lamination (2) adjacent the inner surface of the stator (22) is aligned with a radius (Rs) of the stator.

9. A stator according to any preceding claim, wherein the laminations (2) are formed of planar blanks that are pressed to provide a predetermined amount of curvature.

10. A stator according to any preceding claim, wherein the laminations (2) extend along the arc of a circle.

11. A stator according to claim 10, wherein a radially inner edge (4) of each lamination (2) is aligned with a radius (Rc) of the circle.

12. A stator according to claim 10 or claim 11, wherein a radially outer edge (8) of each lamination (2) is aligned with a radius (Rc) of the circle.

13. A stator according to claim 10 or claim 11, wherein a radially outer edge (8) of each lamination is angled with respect to a radius (Rc) of the circle.

14. A stator according to claim 10, wherein the laminations (2) have a stepped configuration such that a first radially inner edge (4) of each lamination is aligned with a radius (Rc) of the circle to define the inner surface (22) of the stator and a second radially inner edge (6) of each lamination is angled with respect to the radius (Rc) of the circle to define substantially cylindrical end surface (16) of a slot.

15. A stator according to any preceding claim, wherein each layer includes at least one non-laminated segment.

16. A tubular electrical machine including a stator according to any preceding claim, a stator winding having a series of coils (C) received in the series of axially-spaced slots contained in the substantially cylindrical inner surface (22) of the stator, and a translator located inside the stator and spaced apart from the substantially cylindrical inner surface (22) of the stator by an air gap.

17. A method of manufacturing a stator for a tubular electrical machine comprising the steps of:

   producing curved laminations (2); and
   forming axially successive layers of laminations (2), each layer being formed by stacking a plurality of the curved laminations together in the circumferential direction around a central mandrel to form a stator core having a substantially cylindrical inner surface (22) containing a series of axially-spaced slots for receiving the coils (C) of a stator winding, whereby radially inner edges (4,6) of the curved laminations (2) define the slots and the inner surface (22) of the stator.

18. A method according to claim 17, wherein each coil (C) of the stator winding is inserted into an associated one of the axially-spaced slots as the axially successive layers of laminations are formed.

19. A curved lamination (2) for forming a stator of a tubular electrical machine and having a stepped configuration such that a first radially inner edge (4) of the lamination defines a part of an inner surface (22) of the stator and a second radially inner edge (6) of the lamination defines a part of an end surface (16) of a slot when a number of laminations are stacked together in the circumferential direction.

20. A curved lamination (2) according to claim 19, wherein a radially outer edge (8) of the lamination defines a part of an outer surface of the stator when a number of laminations are stacked together in the circumferential direction.

Figure 1

Figure 2

Figure 3

Figure 4C

Figure 4B

Figure 4A

Figure 5

Figure 7

Figure 6

Figure 8

**EP 1 841 040 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5382860 A